Europäisches Patentamt

European Patent Office

Office européen des brevets

(19)

(11) Veröffentlichungsnummer : **0 146 801**
**B1**

(12) **EUROPÄISCHE PATENTSCHRIFT**

(45) Veröffentlichungstag der Patentschrift :
09.11.88

(21) Anmeldenummer : 84114369.6

(22) Anmeldetag : 28.11.84

(51) Int. Cl.⁴ : **G 01 P 15/08**

(54) Verfahren und Vorrichtung zur Messung von Beschleunigungen, Geschwindigkeiten und Umdrehungsgeschwindigkeiten.

(30) Priorität : 22.12.83 DE 3346447

(43) Veröffentlichungstag der Anmeldung :
03.07.85 Patentblatt 85/27

(45) Bekanntmachung des Hinweises auf die Patenterteilung : 09.11.88 Patentblatt 88/45

(84) Benannte Vertragsstaaten :
AT BE CH DE FR GB IT LI LU NL SE

(56) Entgegenhaltungen :
DE-B- 1 086 467
DE-B- 1 224 965
GB-A- 1 039 185
US-A- 2 735 949
Fachlexikon ABC Physik, Bd.1: A-L, S.689, Verlag Harri Deutsch, Zürich und Frankfurt am Main, 1974
Die Akte enthält technische Angaben, die nach dem Eingang der Anmeldung eingereicht wurden und die nicht in dieser Patentschrift enthalten sind.

(73) Patentinhaber : Rickert, Hans, Dr. Prof.
Wilhelm-Dresing-Strasse 37
D-4600 Dortmund 50 (DE)

(72) Erfinder : Rickert, Hans, Dr. Prof.
Wilhelm-Dresing-Strasse 37
D-4600 Dortmund 50 (DE)

(74) Vertreter : Patentanwälte Meinke und Dabringhaus Dipl.-Ing. J. Meinke Dipl.-Ing. W. Dabringhaus
Westenhellweg 67
D-4600 Dortmund 1 (DE)

EP 0 146 801 B1

## Beschreibung

Die Erfindung richtet sich auf ein Verfahren und eine Vorrichtung zur Messung von Beschleunigungen, wobei Ionen in einem Ionenleiter der zu messenden Beschleunigung ausgesetzt werden und die sich durch die Trägheitskräfte der Ionen aufbauende elektrische Spannung zur Bestimmung der Beschleunigung gemessen wird.

Aus der DE-B-1 224 965 sind ein derartiges Verfahren und eine derartige Vorrichtung in Verbindung mit einem elektronischen Beschleunigungsmesser bekannt. Bei diesem Beschleunigungsmesser wird in einem Entladungsgefäß die Ablenkung eines Teilchenstrahles bei Auftreten von Beschleunigung zur Messung herangezogen. Dabei wird als physikalisches Prinzip das Vorhandensein eines Dichtegradienten sowie eines Konvektionsflusses innerhalb des Ionenleiters zugrundegelegt. Das Problem liegt dabei darin, daß hier störende Einflüsse wegen des gewählten Mediums, eines Gases oder eines Plasmas, auftreten können, wenn sich die Bestandteile gegenseitig beeinflussen und ggf. in ihrer Wirkung aufheben.

Die Messung von Beschleunigungen, Geschwindigkeiten und Umdrehungsgeschwindigkeiten ist bei vielen technischen und wissenschaftlichen Apparaturen eine Notwendigkeit. Es sind hierzu auch eine Anzahl von Verfahren entwickelt worden.

Diese Verfahren beruhen auf der Ausnutzung der Trägheit von Körpern, auf optischen oder elektrischen Methoden. Insbesondere beim Abbremsen oder Beschleunigen ist die Messung der sich entwickelnden mechanischen Kräfte erforderlich, was zum Teil sehr unpraktisch sein kann.

Bei Flüssigkeiten und Gasen sind die Möglichkeiten derartiger Beschleunigungsmessungen auf der Basis von Ionenleitern bereits wenigstens theoretisch behandelt worden, so etwa in der DE-AS 1 086 467 bzw. US-PS 2 735 949, wobei in der letzteren ausdrücklich angeführt ist, daß man sich über die Wirkmechanismen nicht recht im klaren ist.

Mit den flüssigen Elektrolyten sind aber eine Reihe von Nachteilen verbunden. Nachteile bestehen insbesondere darin, daß bei flüssigen Elektrolyten mehrere Ionensorten nebeneinander beweglich sind und sich in der hier angesprochenen Anwendung in ihrer Wirkung gegenseitig aufheben würden.

Aufgabe der Erfindung ist die Schaffung eines Meßverfahrens sowie einer Meßvorrichtung, mit denen die Nachteile flüssiger Elektrolyten vermieden werden bei gleichzeitiger Erhöhung der Meßgenauigkeit und Ermöglichung einer sehr robusten Bauweise der Vorrichtung.

Bei einem Verfahren der eingangs bezeichneten Art wird diese Aufgabe gemäß der Erfindung dadurch gelöst, daß als Ionenleiter ein mindestens ein festes Teilgitter aufweisender fester Ionenleiter mit reiner Ionenleitung oder gemischter Leitung der Beschleunigung ausgesetzt wird.

Anders als z. B. in dem Fachlexikon ABC Physik, Verlag Harri Deutsch, 1974, Seite 689 erwähnt, versteht die vorliegende Erfindung unter dem Ausdruck « gemische Leitung » eine Elektronen- und Ionenleitung, wie dies beispielsweise im Referat « Halbleiter » der Deutschen Physikalischen Gesellschaft von 1966, erschienen im Friedr. Vieweg & Sohn Verlag, Braunschweig oder im Fachbuch von J. Hladik « Physics of Electrolytes », Academic Press Verlag, London/New York 1972, definiert ist.

Die Erfindung macht sich die Erkenntnis zunutze, daß es unter festen Stoffen solche gibt, die auch in einem festen Kristall, das heißt mit festem Teilgitter, bewegliche Ionen enthalten. Diese Stoffe werden als feste Ionenleiter bezeichnet.

In Ausgestaltung sieht die Erfindung vor, daß als Ionenleiter ein solcher mit nur einer beweglichen Ionensorte eingesetzt wird. Dies führt zu besonders guten Meßergebnissen, da bei nur einer beweglichen Teilchensorte sehr gut meßbare Signale erzeugt werden können.

Bekannt ist, daß die Trägheitskräfte der Elektronen unter ähnlichen Belastungen in Metallen gemessen werden können. Diese geben jedoch wegen ihrer geringen Masse nur ein sehr kleines elektrisches Signal ab, so daß Meßgeräte auf dieser Basis nicht sinnvoll sind. Ionen, wie z. B. Silberionen, die in einem Silberionenleiter, wie z. B. Silberjodid oberhalb ca. 150 °C oder Silberrubidiumjodid bei Raumtemperatur eine hohe Beweglichkeit haben, besitzen gegenüber Elektronen eine etwa $2 \cdot 10^5$ (200 000) mal größere Masse und führen bei der Beschleunigung oder Abbremsung von Ionenleitern daher zu $2 \cdot 10^5$ mal höheren elektrischen Signalen, d. h. bei sonst gleicher Geometrie des Leiters zu $2 \cdot 10^5$ mal höheren Spannungen.

Zur Spannungsmessung sind Elektroden zu verwenden. Dabei hat sich als besonders zweckmäßig erwiesen, daß als Elektroden ionenaustauschende Elektroden und bei Verwendung gemischter Leiter zusammengesetze Elektroden benutzt werden, deren einer Teil aus einem reinen Ionenleiter besteht.

Eine weitere besonders zweckmäßige Ausgestaltung der Erfindung liegt darin, daß ein Mittel zur einmaligen Aufintegration der Beschleunigung und damit zur Messung der Geschwindigkeit oder ein Mittel der zweimaligen Integration der Beschleunigung und damit zur Messung des zurückgelegten Weges vorgesehen ist. Diese Gestaltung erweitert die Anwendungsmöglichkeit der Erfindung auf Messungen von Geschwindigkeiten und zurückgelegten Wegen.

Nach einer Weiterbildung der Erfindung kann weiterhin vorgesehen sein, zur Messung der Winkelbeschleunigung und damit der Winkelgeschwindigkeit eines sich drehenden Korpers den Ionenleiter auf dem sich drehenden Körper anzuordnen.

Weitere Weiterbildungen der Erfindung sind in den Ansprüchen 5 und 6 definiert. Die Erfindung betrifft auch eine Vorrichtung zur Messung der Beschleunigung der in Anspruch 8 definierten Art.

In besonders wirkungsvoller und zweckmäßiger Ausgestaltung der Erfindung kann vorgesehen sein, daß insbesondere zur Vergrößerung der Meßintensität mehrere Ionenleiter nebeneinander liegend und durch metallische Leiter in Hintereinander- oder Parallelschaltung verbunden angeordnet sind.

Eine weitere Weiterbildung der erfindungsgemäßen Vorrichtung ist in Anspruch 10 aufgeführt. Was die Materialien der einzusetzenden Elemente angeht, so sehen hier Ausbildungsformen der Erfindung vor, daß als Ionenleiter alle bekannten gängigen festen Ionenleiter eingesetzt werden können, so z. B. für Messungen bei Raumtemperatur, insbesondere silberionenleitende Verbindungen, wie z. B. Silberrubidiumjodid, für mittlere Temperaturen oberhalb etwa 150 °C, Ionenleiter wie z. B. Silberjodid oder β-Aluminiumoxid und für hohe Temperaturen oberhalb etwa 700 °C feste Sauerstoffionenleiter, insbesondere dotiertes Zirkonium- oder Thoriumdioxid.

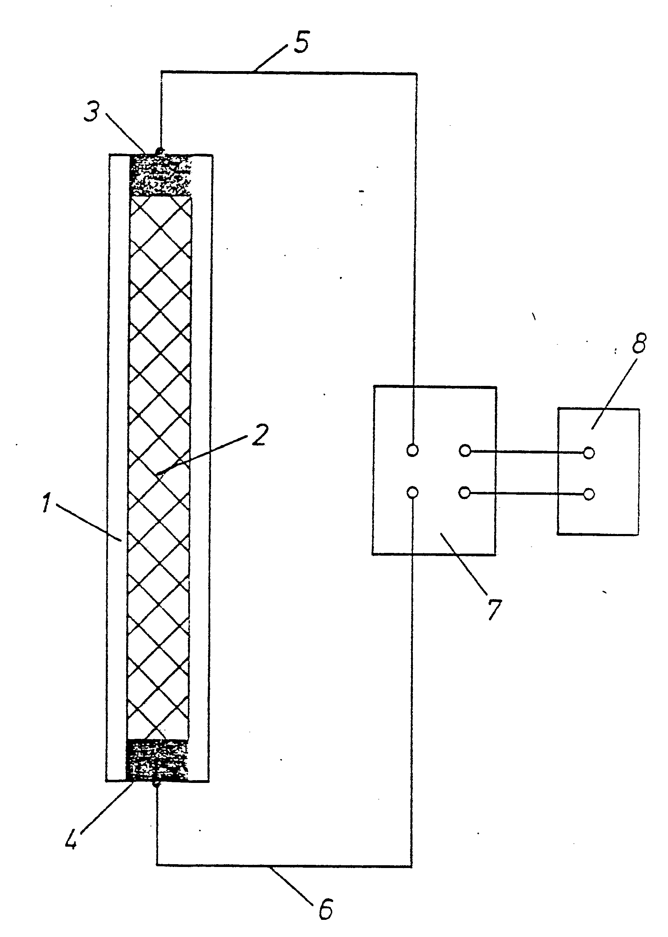

Ein Prinzip der Erfindung ist in der beigefügten Figur schematisch wiedergegeben. Die Vorrichtung besteht aus einer den Ionenleiter tragenden Unterlage oder Umhüllung, z. B. einem Rohr 1, das mit dem Ionenleiter, z. B. Silberrubidiumjodid 2, gefüllt ist und Silberelektroden 3, 4 mit den Zuleitungen 5, 6 besitzt, die mit dem Spannungsmesser 7 und dem weiteren Auswertgerät 8 verbunden sind.

**Patentansprüche**

1. Verfahren zur Messung von Beschleunigungen, wobei Ionen in einem Ionenleiter der zu messenden Beschleunigung ausgesetzt werden und die sich durch die Trägheitskräfte der Ionen aufbauende elektrische Spannung zur Bestimmung der Beschleunigung gemessen wird, dadurch gekennzeichnet, daß als Ionenleiter ein mindestens ein festes Teilgitter aufweisender fester Ionenleiter mit reiner Ionenleitung oder gemischter Leitung der Beschleunigung ausgesetzt wird.

2. Verfahren nach Anspruch 1, dadurch gekennzeichnet, daß als Ionenleiter ein solcher mit nur einer beweglichen Ionensorte eingesetzt wird.

3. Verfahren nach Anspruch 1 oder 2, dadurch gekennzeichnet, daß ein Mittel zur einmaligen Aufintegration der Beschleunigung und damit zur Messung der Geschwindigkeit oder zur zweimaligen Integration der Beschleunigung und damit zur Messung des zurückgelegten Weges vorgesehen wird.

4. Verfahren nach einem der vorangehenden Ansprüche, dadurch gekennzeichnet, daß zur Messung der Winkelbeschleunigung und damit der Winkelgeschwindigkeit eines sich drehenden Körpers der Ionenleiter auf dem sich drehenden Körper angeordnet wird.

5. Verfahren nach einem der vorangehenden Ansprüche, dadurch gekennzeichnet, daß als Ionenleiter bei niedrigen und mittleren Temperaturen Silber-, Kupfer-, Lithium- oder Natriumionenleiter, insbesondere Silberrubidiumjodid, stabilisiertes Silbersulfid, Silberjodid, Lithiumnitrit, β-Eukryptid oder β-Aluminiumoxid verwendet werden.

6. Verfahren nach einem der Ansprüche 1-4, dadurch gekennzeichnet, daß bei hohen Temperaturen Sauerstoff- oder Fluorionenleiter, insbesondere dotiertes Zirkon- oder Thoriumdioxid oder Kalziumfluorid verwendet werden.

7. Verfahren nach einem der vorangehenden Ansprüche, dadurch gekennzeichnet, daß bei Verwendung gemischter Ionenleiter zusammengesetzte Elektroden benutzt werden, von denen ein Teil aus einem reinen Ionenleiter besteht.

8. Vorrichtung zur Durchführung des Verfahrens nach Anspruch 1, unter Verwendung eines Spannungsmessers (7), der an Elektroden (3, 4) angeschlossen ist und aus dessen Meßwert die Beschleunigungen ermittelbar sind, dadurch gekennzeichnet, daß ein mindestens ein festes Teilgitter aufweisender fester Ionenleiter (2) oder gemischter Leiter mit den Elektroden (3, 4) versehen ist, an die der Spannungsmesser (7) angeschlossen ist.

9. Vorrichtung nach Anspruch 8, dadurch gekennzeichnet, daß zur Vergrößerung der Meßintensität mehrere Ionenleiter (2) nebeneinanderliegend und durch metallische Leiter in Parallel- oder Hintereinanderschaltung verbunden angeordnet sind.

10. Vorrichtung nach Anspruch 8 oder 9, dadurch gekennzeichnet, daß ein Auswertgerät (8) insbesondere zur einmaligen oder zweimaligen Integration der Beschleunigung vorgesehen ist.

**Claims**

1. A process for measuring accelerations, whereby ions are exposed in an ion conductor to the acceleration to be measured and the electrical voltage building up due to the forces of inertia of the ions is measured in order to determine the acceleration, characterised in that a stationary ion conductor having at least one stationary partial grid with pure of mixed ion conduction is exposed as an ion conductor to the acceleration.

2. A process according to Claim 1, characterised in that an ion conductor with only one kind of mobile ions is used.

3. A process according to Claim 1 or 2, characterised in that a device is provided for integrating the acceleration once for measuring the velocity, or for integrating the acceleration twice for measuring the distance covered.

4. A process according to one of the preceding Claims, characterised in that, for measuring the angular acceleration and hence the angular velocity of a rotating body, the ion conductor is disposed on the rotating body.

5. A process according to one of the preceding Claims, characterised in that, at low and medium temperatures, silver, copper, lithium or natrium ion conductors, in particular silver rubidium iodide, stabilised silver sulphide, silver iodide, lithium nitrite, β-eucryptite or β-aluminium oxide, are used.

6. A process according to one of Claims 1-4, characterised in that, in the case of high temperatures, oxygen or fluorine ion conductors, in particular doped zirconium dioxide or thorium dioxide or calcium fluoride are used.

7. A process according to one of the preceding Claims, characterised in that, if a mixed ion conductor is used, composite electrodes are used, one part of which consists of a pure ion conductor.

8. Apparatus for carrying out the process according to Claim 1, using a voltmeter (7), which is connected to the electrodes (3, 4) and from whose measured value accelerations can be determined, characterised in that a stationary ion conductor (2), having at least one stationary partial grid, or a mixed conductor is provided with the electrodes (3, 4), to which the voltmeter (7) is connected.

9. Apparatus according to Claim 8, characterised in that, in order to increase the measuring intensity, a plurality of ion conductors (2) are disposed adjacent to one another and are connected in parallel or in series by metal conductors.

10. Apparatus according to Claim 8 or 9, characterised in that an evaluating device (8) is provided, in particular for integrating the acceleration one or twice.

## Revendications

1. Procédé de mesure d'accélérations, dans lequel des ions sont soumis, dans un conducteur d'ions, à l'accélération devant être mesurée et la tension électrique, se formant par l'intermédiaire des forces d'inertie des ions, est mesurée pour déterminer l'accélération, caractérisé par le fait que, en tant que conducteur d'ions, un conducteur d'ions solide à pure conduction ionique ou à conduction mixte, présentant au moins un réseau partiel solide, est soumis à l'accélération.

2. Procédé selon la revendication 1, caractérisé par le fait qu'on utilise, en tant que conducteur d'ions, un tel conducteur présentant seulement une variété d'ions mobile.

3. Procédé selon la revendication 1 ou 2, caractérisé par le fait qu'un moyen est prévu pour l'intégration unique de l'accélération et, par conséquent, pour la mesure de la vitesse, ou bien pour l'intégration double de l'accélération et, par conséquent, pour la mesure du trajet parcouru.

4. Procédé selon l'une des revendications précédentes, caractérisé par le fait que, pour mesurer l'accélération angulaire et par conséquent la vitesse angulaire d'un corps tournant, le conducteur d'ions est disposé sur ce corps tournant.

5. Procédé selon l'une des revendications précédentes, caractérisé par le fait qu'on utilise en tant que conducteurs d'ions, à des températures basses et moyennes, des conducteurs d'ions argent, cuivre, lithium ou sodium, en particulier de l'iodure de rubidium argentique, du sulfure d'argent stabilisé, de l'iodure d'argent, du nitrure de lithium, de l'eucryptite β ou de l'oxyde l'aluminium β.

6. Procédé selon l'une des revendications 1-4, caractérisé par le fait qu'on utilise, à des températures élevées, des conducteurs d'ions oxygène ou fluor, en particulier du dioxyde de zirconium ou de thorium dopé, ou du fluorure de calcium.

7. Procédé selon l'une des revendications précédentes, caractérisé par le fait que, lorsqu'on utilise des conducteurs d'ions mixtes, l'on emploie des électrodes composites dont une partie consiste en un conducteur d'ions pur.

8. Dispositif pour la mise en œuvre du procédé selon la revendication 1, en utilisant un mesureur de tension (7) qui est raccordé à des électrodes (3, 4), et à partir de la valeur mesurée duquel les accélérations peuvent être déterminées, caractérisé par le fait qu'un conducteur d'ions solide (2) présentant au moins un réseau partiel solide, ou bien un conducteur mixte, est muni des électrodes (3, 4) auxquelles le mesureur de tension (7) est raccordé.

9. Dispositif selon la revendication 8, caractérisé par le fait que, pour accroître l'intensité de mesure, plusieurs conducteurs d'ions (2) sont agencés en juxtaposition et sont raccordés par un branchement en succession ou en parallèle, par l'intermédiaire de conducteurs métalliques.

10. Dispositif selon la revendication 8 ou 9, caractérisé par le fait qu'un appareil d'interprétation (8) est prévu, en particulier, pour l'intégration unique ou double de l'accélération.